# EUROPEAN PATENT APPLICATION

(11) **EP 0 978 890 A1**
(43) Date of publication of application: **09.02.2000**
(21) Application number: 99306050.8
(22) Date of filing: 29.07.1999
(51) Int. Cl.: H01M 4/96, H01M 12/06, C01B 31/10, C01B 31/12

(54) **Electrodes and electrochemical cells made with such electrodes**

(30) Priority: 03.08.1998 US 95184 P; 14.12.1998 US 211472
(71) Applicant: RAYOVAC CORPORATION, Madison Wisconsin 53711 (US)
(72) Inventor: Young, David Matthew, Madison, WI 53704-7611 (US)
(74) Representative: Harvey, David Gareth

(57) **Abstract**

An electrochemical cell (39) such as an electrochemical button cell, comprises a metal anode (34) and an air cathode (10), and is commonly known as an air depolarized or metal-air cell. The electrochemical cell (39) contains an improved air cathode assembly (10) comprising an improved catalytically active carbon composition. The air cathode assembly (10) comprises a current collector (28) e.g. of nickel mesh embedded in a layer of a mixture of catalytically active carbon composition and a binder. The catalytically active carbon composition provides reaction sites for cell reactions between gaseous and liquid reagents, and is a stable and non-oxidizable at temperatures in the range 80-140°C to facilitate manufacturing processing operations.

## Description

This invention relates to electrochemical cells having metal anodes and air cathodes, commonly known as air depolarized or metal-air cells. More particularly, the present invention relates to the use of a catalytically active carbon material in an air depolarized electrochemical cell. Even more particularly, the invention relates to a novel electrode having a novel catalytically active carbon.

The increase in the use of electrically powered devices has increased the demand for the efficiency of electrochemical cells. The advantages of air depolarized electrochemical cells have been known for at least several decades. Such metal-air cells have gained increasing popularity over the years because only the anode material need be packaged in the cell, while the cathode material is oxygen that is taken from the surrounding atmosphere.

As a result, the amount of anode material which can be carried in an air depolarized cell is generally significantly greater than the amount of anode material which can be carried in a 2-electrode cell. "2-electrode cell", as used herein, is an electrochemical cell wherein both anode active material and cathode active material are housed inside the cell structure.

Metal-air cells take in atmospheric oxygen, and convert the oxygen to hydroxyl ions in the air cathode. The hydroxyl ions then migrate to the anode, where they cause the metal located within the anode to oxidize. The active anode material in such cells usually comprises zinc.

More particularly, the desired reaction in the air cathode of a metal-air cell involves the reduction of oxygen, the consumption of electrons, and the production of hydroxyl ions, the hydroxyl ions migrating through the electrolyte toward the anode, and oxidizing zinc in the anode to form zinc oxide.

In the majority of metal-air cells, air enters the cell through one or more air ports, or apertures, in the cell. The air ports can be immediately adjacent the cathode assembly, but generally are separated from the cathode assembly by an air chamber which is occupied by a diffusion membrane. In either arrangement, air enters the cathode assembly, and oxygen in the air reacts with water, at the cathode assembly, to form the above-noted hydroxyl ions.

The cathode assembly of metal-air cells generally includes a mixture of activating materials supported by a current collecting substrate, the current collecting substrate being capable of making reliable electrical contact with electrical circuitry. The activating materials are usually comprised of carbon, and one or more additives such as an oxide of manganese.

The most common commercial use of metal-air cells is in powering hearing aid appliances. The general trend of technical innovation in hearing aid appliances suggests a trend toward a requirement for increasing the voltage needed to power such hearing aid appliances.

Conventional cells have addressed increasing the operating voltage of the air cathode, and thus the voltage of zinc air cells, by using metal or alkali impregnated carbons to increase catalytic activity. Such impregnated carbons present increased risks of ignition and other exothermic reactions during manufacture of the respective air cathode as well as problems related to toxicity, thermal instability, and difficulty of regeneration and disposal.

Accordingly, it would be desirable to provide, for use in the air cathode, an activated carbon composition that has enhanced catalytic properties without the risks of ignition and/or exothermic reactions. It would further be desirable to provide such a carbon composition which is devoid of effective amounts of noble metal and alkali metal impregnation. Such carbon composition could eliminate, or otherwise attenuate, any potential for problems related to toxicity, thermal instability, difficulty of regeneration and disposal of such carbon compositions.

It would further be desirable to provide effective catalytic carbon compositions having ignition temperatures of at least about 350 degrees C. to about 400 degrees C.

It is an object of the invention to provide an electrode for use in an electrochemical cell and wherein such electrode contains a catalytic carbon composition.

Desirably the invention provides an air cathode assembly for use in an electrochemical cell, wherein such air cathode assembly contains a catalytic carbon composition exhibiting attenuated risk of ignition or other exothermic reaction during fabrication of such cell.

The invention aims to provide an electrochemical cell comprising a catalytic cathode carbon composition which offers potential for increased cell voltage while attenuating the risk of ignition or other exothermic reaction during fabrication of such cell.

The invention also aims to provide a method of making an electrode for use in an electrochemical cell wherein such electrode contains a catalytic carbon composition exhibiting attenuated risk of ignition or other exothermic reaction during fabrication of such cell.

### Summary of the Invention

Some of the objects of the invention are attained in a novel electrode for use in an electrochemical cell. The electrode has a current collector and a catalytically active carbon matrix. The catalytically active carbon matrix comprises a catalytically active carbon material and a binder, defining a sheet-like structure. The catalytically active carbon material has a peroxide number of about 8 minutes to about 30 minutes. The current collector is embedded in the sheet-like structure of the catalytically active carbon matrix. The carbon matrix defines reaction sites for reaction between gaseous and liquid reactants in the electrochemical cell, and is free from rapid oxidation at temperatures of 80 degrees C. to about 140 degrees C. In other words, the catalytic carbon is substantially inoxidizable when exposed to air or oxidizing gases and temperatures in the said range. In consequence, the catalytic carbon exhibits a reduced risk of ignition or of undergoing exothermic reactions during fabrication of a cell. The catalytic carbon is free from such oxidation as would negatively affect the catalytic activity of the carbon.

An electrochemical cell of the invention comprises an anode and a cathode. The anode includes an anode can, and an electroactive anode material in the anode can. The cathode includes a cathode can, and a cathode assembly in the cathode can.

Preferably, the catalytically active carbon matrix includes a manganese moiety.

Also preferably, the carbon matrix is devoid of effective amounts of noble metal and alkali metal impregnation.

Further, it is preferred that the catalytically active carbon material, prior to being fabricated into the catalytically active carbon matrix as part of the cathode assembly, have an apparent density of about 0.3 gram per cm³ to about 0.7 gram per cm³.

Preferably, the catalytically active carbon material used in making the electrode is fabricated by oxidizing a carbonaceous material at temperatures below 700 degrees C. in the presence of an oxidizing moiety and a chemically active nitrogen-containing moiety; calcining the carbonaceous material in inert atmosphere at a temperature of at least 700 degrees C.; and implementing activation of the calcined carbonaceous material at a temperature of at least 700 degrees C. thereby to obtain the catalytically active carbon material. Implementing activation of the catalytic carbon preferably comprises holding the carbonaceous material at temperature of at least 700 degrees C. in the presence of at least one of H₂O, CO₂ and O₂.

Other objects of the invention are obtained in a novel air cathode assembly for use in an air depolarized electrochemical cell. The novel air cathode assembly comprises a catalytically active carbon electrode, a barrier layer, and preferably but not necessarily an air diffusion layer. The carbon electrode comprises a cathode current collector having contact sites for cooperation with a cathode terminal, and a catalytically active carbon matrix. The carbon matrix comprises a catalytically active carbon material and a binder, defining a sheet-like structure. The catalytically active carbon material has a peroxide number of about 8 minutes to about 30 minutes. The cathode current collector is embedded in the sheet-like structure of the catalytically active carbon matrix thereby to form the catalytically active carbon electrode. The carbon electrode has a first side and an opposing second side. The barrier layer is disposed on the first side of the catalytically active carbon electrode and the air diffusion layer, when used, is disposed on the second side of the catalytically active carbon electrode.

Preferably the air cathode assembly is fabricated by a process comprising heating a catalytically active carbon composition to a temperature of at least about 80 degrees C. to about 140 degrees C., preferably at least about 100 degrees C. to about 120 degrees C., more preferably about 110 degrees C., for at least about 4 hours, preferably at least about 8 hours, more preferably at least about 12 hours, still more preferably at least about 16 hours; fabricating a mass of the carbon composition into a sheet-like structure; combining the cathode current collector with the carbon composition, thereby to form the electrode, and the first and second sides of the electrode; mounting the barrier layer on the first side of the electrode; and mounting the air diffusion layer on the second side of the electrode.

Still other objects of the invention are attained in an air depolarized electrochemical button cell comprising an anode and a cathode. The anode includes an anode can and an electroactive anode material in the anode can. The cathode includes a cathode can and a cathode assembly in the cathode can. The cathode assembly comprises a catalytically active carbon electrode, comprising a cathode current collector and a catalytically active carbon matrix. The cathode current collector has contact sites for cooperative conduction of electricity between the current collector and a cathode terminal. The catalytically active carbon matrix comprises a catalytically active carbon material and a binder, defining a sheet-like structure. The catalytically active carbon material has a peroxide number of about 8 minutes to about 30 minutes. The cathode current collector is embedded in the sheet-like structure of the catalytically active carbon matrix, thereby to form the active carbon electrode. The catalytically active carbon electrode has a first side and an opposing second side. The cathode assembly further comprises a barrier layer disposed on a first side of the catalytically active carbon electrode, and an air diffusion layer disposed on a second opposing side of said catalytically active carbon electrode.

Preferably, the carbon matrix is devoid of effective amounts of noble metal impregnation.

Yet other objects of the invention are attained in a process of making an electrode for use in an electrochemical cell. The process comprises heating, to a temperature of at least about 80 degrees C. to about 140 degrees C., preferably at least about 100 degrees C. to about 120 degrees C., more preferably about 110 degrees C., for at least about 4 hours, preferably at least about 8 hours, more preferably at least about 12 hours, still more preferably at least about 16 hours, a carbon composition made by oxidizing a carbonaceous material at temperatures below 700 degrees C. in the presence of an oxidizing moiety and a nitrogen-containing moiety; calcining the carbonaceous material in inert atmosphere at a temperature of at least 700 degrees C.; implementing activation of the calcined carbonaceous material at a temperature of at least 700 degrees C.; fabricating a mass of the carbon composition into a sheet-like structure; and combining the cathode current collector with the carbon composition, thereby to form the electrode.

Embodiments of the present invention will now be described by way of example with reference to the accompanying drawings, in which:
FIGURE 1 is a representative perspective view, in cross-section, of a portion of an air cathode assembly of the present invention;
FIGURE 2 is an enlarged perspective view, in cross-section of the air cathode assembly of FIGURE 1;
FIGURE 3 shows a cross-section of a zinc-air electrochemical button cell employing a novel active carbon electrode of the invention;
FIGURE 4 is a graph showing heat flow of compared carbon compositions, in air, as measured by a differential scanning calorimeter;
FIGURE 5 is a graph showing heat flow of compared carbon compositions, in argon, as measured by a differential scanning calorimeter; and
FIGURE 6 is a bar chart showing closed circuit voltage of comparative cells operating in air and oxygen environments.

The invention is not limited in its application to the details of construction or the arrangement of the components set forth in the following description or illustrated in the drawings. The invention is capable of other embodiments or of being practiced or carried out in other various ways. Also, it is to be understood that the terminology and phraseology employed herein is for purpose of description and illustration and should not be regarded as limiting. Like reference numerals are used to indicate like components.

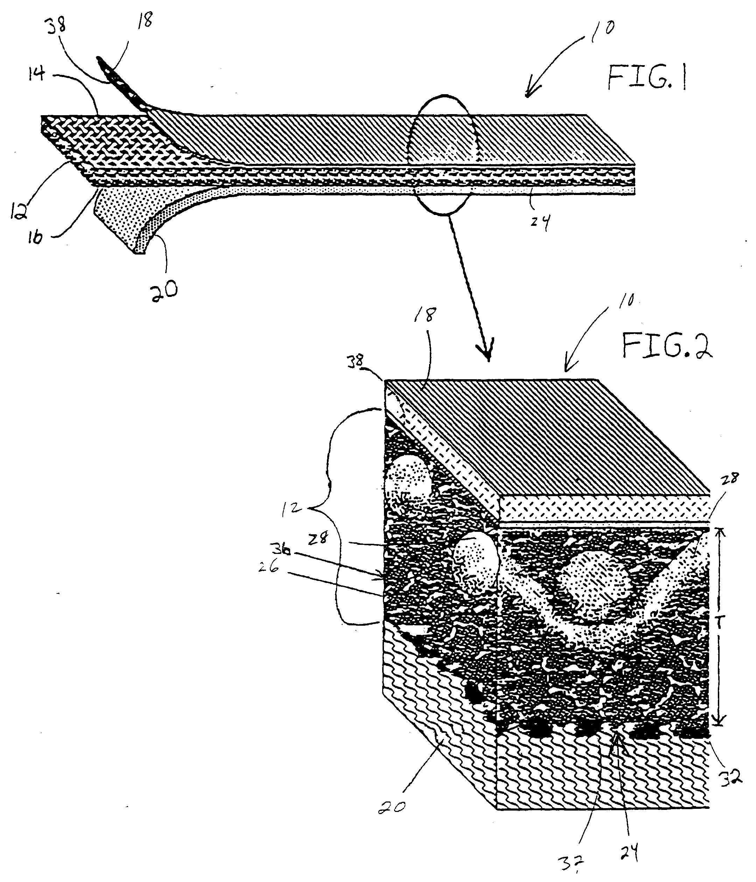

Referring by characters of reference to the drawings, FIGURES 1-3 illustrate the use of an air cathode assembly **10** containing an active carbon electrode **12** within an electrochemical cell **39,** also known as an air depolarized or metal-air cell. The basic structure of such cell includes an anode **34** including an anode can **40** containing electroactive anode material **42,** a cathode including a cathode can **30** containing an active carbon electrode disposed within the air cathode assembly, a barrier layer or separator **18** between the active carbon electrode and the anode material, and a seal **74** between the anode can and the cathode can.

Air cathode assembly **10** of the invention is illustrated in FIGURES 1-3. Catalytically active carbon electrode **12** of air cathode assembly **10** has a first side **14** and a second side **16**. A barrier layer **18** is disposed on the first side of the carbon electrode and an air diffusion layer **20** is disposed on the opposing second side of the carbon electrode. Catalytically active carbon electrode **12** facilitates the reaction between hydroxyl in the electrolyte and the cathodic oxygen of the air. Barrier layer **18** permits passage of hydroxyl ions and water therethrough between the active carbon electrode and the electroactive anode material.

Air diffusion layer **20,** preferably performs a variety of functions in an electrochemical cell, and provides a variety of properties to the electrochemical cell.

In general, and in combination with air ports **22,** air diffusion layer **20** provides a path for diffusion of oxygen to the active reaction surface **24** of the catalytically active carbon electrode. In addition, air diffusion layer **20** provides moisture and liquid barriers to prevent, retard, attenuate, or otherwise discourage leakage of water vapor or liquidous material into or out of the cell, and distributes especially incoming air laterally about the length and width of the diffusion layer. A typical diffusion layer **20** is made from microporous polytetrafluoroethylene (PTFE) about 0.002" to about 0.006" (0.051-0.15mm)thick. Suitable such material is available from Performance Plastics Products Inc., Houston, Texas as PTFE Ultrathin Membrane®.

Catalytically active carbon electrode **12** generally comprises an active carbon matrix **26,** and a current collector **28,** preferably a conductive woven nickel wire as shown in FIG. 2, providing electrical contact, at suitable contact sites, suitable for conducting electricity between carbon matrix **26** and cathode can **30**. Nickel is preferred for the current collector because nickel exhibits little or no corrosion in the alkaline environment of the zinc-air cell, and also because nickel is an excellent electrical conductor and is readily available at reasonable cost.

Other materials can be used for the cathode current collector including nickel plated steel, nickel plated stainless steel, nickel plated iron, nickel cladded onto the above and other substrates, and like materials which can tolerate the alkaline environment inside the cell without excessive local reactions.

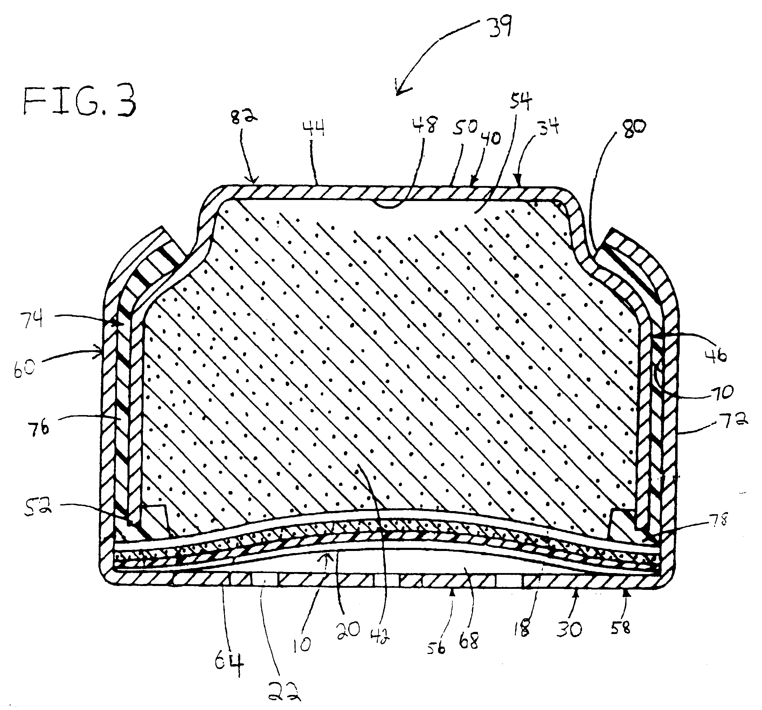

Generally, the active carbon material is supported on the current collector. The active carbon provides reaction sites, illustrated at **32** in FIGURE 2, where gaseous oxygen from ambient air reacts with water from the aqueous electrolyte, according to the cathode half reaction (1), to generate hydroxyl ions which are used in anode **34** (FIGURE 3) to release electrons, according to the anode half reaction (2).

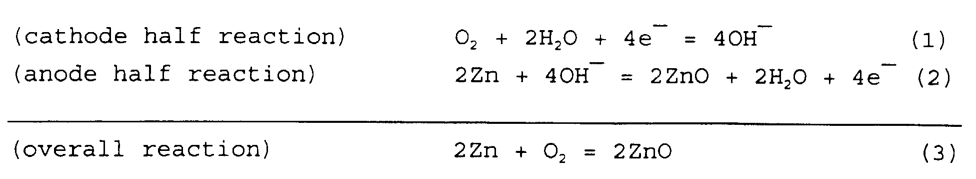

The catalytically active carbon material cooperates with the current collector in collecting and/or conducting the current within active carbon electrode **12** in support of the cathode half reaction.

Catalytically active carbon material used in fabricating active carbon electrodes of the invention has a peroxide number of about 8 minutes to about 30 minutes, preferably about 12 minutes to about 22 minutes, more preferably about 15 minutes to about 19 minutes, and an iodine number of at least about 800 milligrams per gram (mg/g), preferably at least about 875 mg/g, more preferably at least about 950 mg/g.

Iodine number is determined according to modified ASTM D4607.

Peroxide number is determined according to a test procedure taught in United States Patent 5,470,748 Hayden et al, herein incorporated by reference in its entirety. As taught therein, the peroxide test provides a method for establishing an index by which the relative catalytic activities of carbonaceous chars can be evaluated. The index is derived by measuring the time required to achieve a certain fraction of the maximum contact of carbonaceous char with a material which decomposes exothermically and catalytically upon such contact. The rise in system temperature resulting from the heat evolved by the ensuing decomposition of the peroxide is monitored as a function of time.

The index is established by determining the time required for the temperature rise to achieve a predetermined fraction, preferably three-fourths, of the maximum temperature rise. This time is used as an index to compare the relative catalytic activities of other carbonaceous chars the indices of which are determined in the same manner.

Preferably, the carbonaceous char is first pulverized to a very fine mesh size. Typically, this pulverization is found to be satisfactory if greater than 90% by weight of the char will pass through a 325 mesh U.S. Standard Series sieve. Other particle size distributions may be used but diffusional and other effects may bias the results. Once pulverized, a defined portion of the carbonaceous char is placed into the sample chamber of the test apparatus. The size of this defined portion of the carbonaceous char is best characterized on a mass basis, and should be selected such that the rate of decomposition of the defined amount of hydrogen peroxide proceeds at a conveniently measurable rate which enables accurate and precise determinations of the reaction mixture temperature as a function of time.

Once placed into a sample chamber, the pulverized carbonaceous char is wetted with a defined quantity of buffer solution. The volume of the buffer solution is such that the carbonaceous char is freely suspended in the solution once mechanical mixing is initiated. The mixing speed should be sufficient not only to suspend the pulverized carbonaceous char but also to minimize any bulk diffusion effects on the rate of hydrogen peroxide decomposition. Bulk diffusion effects are minimized by use of a mixing speed such that additional increases in the mixing speed do not result in significant increases in the rate of peroxide decomposition. Generally, mixing speeds that result in the formation of a significant vortex in the mixture are adequate.

The buffering capacity of the buffer solution is selected such that the reaction mixture is maintained at the desired pH irrespective of the pH-related effects of the carbonaceous char and/or the hydrogen peroxide solution and/or the reaction products thereof. The buffer solution is most conveniently aqueous in nature although non-aqueous solution may also be used. The preferred pH of the buffer solution is seven (neutral). A higher or lower pH buffer solution may be used, but the rate of peroxide decomposition is pH dependent. As such, a change in pH of the buffer solution may be used to change the range of the test. Any liquid may be substituted for the buffer solution but a loss of buffering capacity may result. This loss of buffering capacity must be compensated for if it occurs.

After the addition of the buffer solution to the char, mechanical stirring of the mixture and monitoring of the temperature of the carbonaceous char-buffer solution mixture are initiated. Once this mixture has achieved a constant, preferably ambient temperature, a defined amount of hydrogen peroxide is rapidly added to the stirring mixture. Preferably, the hydrogen peroxide is in an aqueous solution or defined volume at a temperature equal to that of the carbonaceous char-buffer solution mixture. The quantities of either solution that are adequate to satisfy the requirements of this test are not critical provided that sufficient materials are available to result in an accurate, measurable system temperature increase with respect to time. Non-aqueous solutions of hydrogen peroxide may be used provided these solutions are miscible with the buffer solution and also wet the carbonaceous char without occluding the catalytic sites responsible for decomposition of the peroxide. Other types of peroxides may be used neat or in solution depending on the characteristics of the individual peroxide. But, the safety and convenience of dilute hydrogen peroxide aqueous solutions make them the preferred peroxide reactants in the present invention.

The temperature of the reaction mixture is monitored until the temperature increases to a constant value. For a given reaction mixture and adiabatic apparatus, the magnitude of this temperature increase is essentially independent of the catalytic activity of the carbonaceous char. However, the rate at which this maximum temperature is achieved is dependent on the catalytic properties of the carbonaceous char. Therefore, for a given reaction mixture, the elapsed time required for the system to achieve the maximum temperature, or some portion thereof, can be used to quantitatively compare the catalytic activities of a variety of carbonaceous chars.

Typically, the approach of the system temperature to this maximum value is initially very fast but becomes relatively slow once 80 to 90% of the maximum temperature has been achieved. Therefore, an increase in precision and accuracy is obtained by comparing the elapsed times required for carbonaceous chars to achieve some percentage less than about 80% of the total temperature rise. For purposes of the test herein, this value has been selected as 75%, i.e., the time required for the reaction mixture to achieve three-quarters of the total temperature rise possible. The value of this elapsed time period is referred to as the "t-¾ time". This value is typically expressed in units of minutes. The lower the t-¾ time, the higher is the level of catalytic activity for a given char. Thus, the "t-¾ time" is used to quantitatively evaluate and subsequently rank the catalytic activities of carbonaceous chars.

### EXAMPLE OF PEROXIDE TEST

Activated carbon is sized to produce an approximately less than 12 mesh size and greater than 20 mesh size (U.S. Standard Series sieves) material.

Portions of this material are heated to 900°C in a small rotary kiln under an inert gas flow. Once the desired 900°C temperature is achieved, the inert gas flow is stopped and a mixture of ammonia gas and water vapor having a molar ratio of 0.4 moles NH₃ to 1.0 moles H₂O is injected into the kiln. These conditions are maintained for differing periods of time, after which the treated carbonaceous chars are cooled to ambient temperature under an inert gas flow. Carbonaceous char samples produced in this manner exhibit Apparent Densities (Test Method TM-7, Calgon Carbon Corporation, Pittsburgh Pa.) Of 0.606 grams per cc and 0.541 grams per cc.

The catalytic activities of these samples are determined by measuring the time required for each to decompose a given quantity of aqueous hydrogen peroxide. The carbonaceous char to be tested is first pulverized such that greater than 90% of the material will pass through a 325 mesh U.S. Standard Series sieve. A 0.250 gram portion of this pulverized material is placed in a Dewar. Deionized water (100 ml) is then added to the Dewar. The addition of this water is performed in such a manner that any pulverized carbonaceous char clinging to the sides of the Dewar is carried into the main body of the water in the bottom. Next, a 50 mL aliquot of aqueous buffer solution is added to the Dewar. This buffer solution is 0.50 molar in K₂IPO₄ and 0.50 molar in KH₂PO₄. At this point, a magnetic stir bar is placed into the Dewar and the magnetic stirrer is energized. Stirring speed is increased until a vortex greater than about ½" deep is formed in the mixture and the optimum stirring speed is achieved. The optimum stirring speed is selected such that additional increases in stirring speed do not significantly affect the peroxide decomposition time. Once identified, this optimum stirring speed can be used for all subsequent char samples. If the stir bar decouples from the magnetic field before the optimum stirring speed is achieved, it is replaced with a bar which couples more strongly with the magnetic field of the stirrer. Optionally, the Dewar can be replaced with an equivalent unit that, due to manufacturing variances, positions the stir bar farther into the magnetic field of the stirrer. If the stir bar still does not adequately couple with the magnetic field of the stirrer, the Dewar can be shortened by removing some of the bottom portion of the outside metal casing. A styrofoam cap is then placed on the Dewar, and a thermocouple (Type K or J, 1/16" diameter, Inconel sheathed, or ungrounded) is inserted through the styrofoam cap and into the mixture such that a measurement representative of the mixture temperature can be obtained, and a thermocouple ice point compensator (Model MCJ-J or MCJ-K, Omega Engineering, Inc., Stamford, Conn.) and a strip chart recorder are energized.

The strip chart recorder tracing is monitored until the system is seen to come to thermal equilibrium at ambient temperature. Once thermal equilibrium is achieved, 50 mL of an aqueous hydrogen peroxide solution (0.42 moles H₂O per 50 mL) is added, as rapidly as possible, to the Dewar through a funnel in the styrofoam cap. Care is taken to ensure that the hydrogen peroxide solution is at ambient temperature prior to the addition. As the hydrogen peroxide solution is added to the Dewar, the strip chart recorder tracing is marked to indicate the time of addition. The strip chart recorder tracing is then monitored until the tracing indicates that a constant temperature above ambient has been reached. Using the materials and procedures described, this constant temperature is typically about 40°C greater than ambient temperature. At this point, the styrofoam cap is removed from the Dewar and the action of the stir bar is observed.

If the stir bar is no longer mixing the solution in the desired manner the entire procedure is repeated. If adequate mixing is observed, the elapsed time required for the recorder tracing to reach 75% of its maximum deflection is determined. This value represents the time required for the catalytically active carbonaceous char to decompose three-fourths of the available hydrogen peroxide and is referred to as the t-¾ time. This is the value reported above in units of minutes.

Preferred carbons preferably have apparent density of about 0.3 gram per cm³ to about 0.7 gram per cm³, and comprise product of limited oxidation of a carbonaceous precursor. Apparent density is determined according to ASTM D2854-83.

Catalytically active carbon matrix **26** is comprised of a catalytically active carbon material and a binder which, in combination, define a sheet-like carbon structure **36.**

A preferred binder is polytetrafluoroethylene (PTFE), about 2% to about 12% by weight, more preferably about 5% by weight of the active carbon material composition.

As used herein, "active carbon material composition" includes the carbon and any additives physically associated with the carbon in layer **26,** not including liquidous electrolyte.

The catalytically active carbon matrix provides reaction sites for the reaction between gaseous oxygen from the air and liquid reactants such as aqueous alkaline electrolyte in an electrochemical cell.

The physical structure of the carbon used in fabricating catalytically active carbon electrodes of the invention is typically particulate, comprising, for example, granules, pellets, powder and particles having other shapes and/or configurations.

A process for forming suitable such carbon is taught in U.S. Patents 5,504,050 and 5,444,031, which are incorporated herein by reference in their entireties, especially for their teachings regarding the compositions of such carbons, and how such carbons are made and used, and whereby fabrication and use of such carbons is well known.

The process of making such carbons, as disclosed in the above-referenced patents, generally comprises making a carbon material having significant catalytic properties per se and wherein the catalytically active carbon material is prepared directly from an inexpensive and abundant nitrogen-poor feedstock such as bituminous coal or a bituminous coal-like material such as those derived from higher or lower rank bitumens and coals and ligno-cellulose and other materials such as chars derived from crude oil, by various chemical treatments. Examples of higher rank coals include anthracite and semi-anthracite coals while examples of lower rank coals include peat, lignite, and sub-bituminous and bituminous coals. Examples of the chemical treatment of such feedstocks include alkali metal treatment of the high rank coal materials and zinc chloride or phosphoric acid treatment of the low rank coal materials. Such types of treatments can also be effectively applied to ligno-cellulose materials such as wood, and other vegetable materials.

In one preferred embodiment of the invention, a feedstock material is pulverized, mixed, if necessary, with a small amount of a suitable binder such as pitch, briquetted or otherwise formed, and sized into articles of desired size and shape. The so-fabricated carbon material is then exposed to limited oxidation by an oxidant such as air at temperatures less than 700 degrees C., preferably less than 400 degrees C. for a desired period, typically about 1 hour to about 10 hours, preferably at least 5 hours, to thereby make an oxidized low-temperature carbonaceous char.

Other convenient means of oxidation can also be used to effect the low-temperature oxidation and carbonization of the starting material for use in making carbon matrix **26** of the invention, such as exposing the carbonaceous material to an oxygen-containing carbon oxidant.

After the above oxidation process, the carbon material so oxidized is treated with small amounts of one or more nitrogen-containing moieties at an elevated temperature. The nitrogen-containing moieties can be, for example, ammonia, urea, melamine, or combinations thereof, or any derivative, or combinations of derivatives thereof, having at least one nitrogen functionality in which the nitrogen exhibits a formal oxidation number less than the oxidation number of elemental nitrogen. The amounts of nitrogen-containing compounds used are typically small, preferably no more than about 5% by weight of the oxidized low-temperature carbonaceous char.

The nitrogen treatment is carried out by heating the oxidized low-temperature carbonaceous char to temperatures higher than the above-recited 700 degrees C., preferably to temperature between 850 degrees C. and 950 degrees C., in the presence of the nitrogen-containing moiety. Such heating is preferably conducted in an atmosphere that is inert, except for the gases and vapors attributable to the char and/or the nitrogen-containing compound. Inert atmospheres are generally oxygen free, and may comprise any of a variety of non-reacting moieties such as carbon dioxide, argon, or helium.

The nitrogen-treated high-temperature char is then activated, and converted to the desired density, at temperatures of at least 700 degrees C., using at least one of steam, carbon dioxide, and oxygen with or without the addition of other gasifying agents such as air. The so-treated carbonaceous material is then cooled in an oxygen-free or otherwise inert atmosphere to less than 400 degrees C., preferably less than 200 degrees C. In some embodiments, additional gains in catalytic activity may be realized by repeating one or more of the above steps. Alternatively, any other method known to generate catalytic activity in high-temperature chars may be applied to the above carbonaceous material after such material has been treated with nitrogen moiety as recited above.

The so-produced activated catalytic carbon is the raw material used in fabrication of sheet-like carbon structure **36.**

### EXAMPLE OF AIR CATHODE ASSEMBLY

Air cathode assembly **10** can be fabricated using the catalytically active carbon material described above, employing the following procedure.

1000 milliliters of distilled water is placed in a nonreactive container. 19 grams of potassium permanganate (KMnO₄) are added to the 1000 milliliters of water. The mixture of KMnO₄ and water is mixed for ten minutes. 204 grams of the above prepared activated carbon, available as Centaur® carbon from Calgon Corporation of Pittsburgh, Pennsylvania, is added slowly to the mixture at the central mix vortex while mixing is continued with sufficient vigor to create a mix vortex. After ten minutes of further mixing, 51 grams of PTFE available from DuPont Company, Wilmington, Delaware, as TEFLON T-30®, is added slowly, uniformly, and without interruption to the mix vortex. Mixing is continued for yet another ten minutes at the speed required to maintain a vortex in the mix after the PTFE is added, so as to make a generally homogeneous mixture of the components and to fibrillate the PTFE.

The resulting solution is filtered through Whatman #1 or equivalent filter paper, and then heated to between 80 or 100 degrees C. and 140 degrees C., in a mechanical convection drying oven for at least 4 hours, preferably at least 8 hours, more preferably at least 12 hours, and still more preferably at least 16 hours, or until dry, to yield a cake of the carbon, manganese moiety, and PTFE, comprising a dry cathode material.

The full amount of recovered dry cathode material as set forth above, 3 grams of Black Pearls 2000® carbon black available from Cabot Corporation of Amarillo, Texas, and optionally five grams of pre-densified cathode mix from previous manufacturing runs, are placed in a Model W10-B Littleford Lodiqe High Intensity Mixer, and mixed at 2600 rpm at a temperature between about 80 degrees C. and 100 degrees C. for 30 minutes, or until any and all agglomerates in the mix separate and the mix becomes free flowing.

The resulting mix is rolled into a sheet-like structure such as **36** using conventional stainless steel roller mills of appropriate spacing.

A current collecting substrate, preferably a woven nickel metal screen, is then embedded into the sheet-like structure, thereby providing active carbon electrode material, comprising the catalytically active carbon, and a current collector embedded in the carbon.

Alternatively, the current collecting substrate can comprise silver, platinum, palladium, or other suitable metals or metal alloys, including multiple layer structures, providing the combination of good electrical conductivity and suitable physical strength.

The current collecting substrate is typically about .004" to about .015" (0.10 to 0.38mm) thick. The overall thickness "T" of active carbon electrode **12** is thus typically about .005 inch to about .018 inch (0.13 to 0.46mm).

Next, barrier layer **18** is mounted preferably by adhesive **38** onto the first side of the sheet-like carbon structure. A typical such barrier sheet is comprised of microporous plastic, preferably polypropylene.

Finally, in preferred embodiments, a porous hydrophobic polymeric polytetrafluoroethelyne (PTFE) air diffusion layer **20** is mounted by pressure onto the second side of the sheet-like carbon structure. The air diffusion layer has a porosity, preferably but not necessarily, capable of accommodating a limiting current produced by a cell made with such diffusion layer **20,** up to about 100mA/cm² at 0.8 volts.

Once the layers **18, 20** are mounted to sheet-like structure **36,** the resulting structure is cut to size to provide individual air cathode assemblies for use in respective individual electrochemical cells.

While those skilled in the art will recognize that the present invention is applicable to electrodes and air cathode assemblies for a wide variety of air depolarized and/or metal-air electrochemical cells, including electrochemical button cells, the above example may be employed with a zinc-air electrochemical cell as described in detail in U.S. Patent 5,721,065, which is incorporated by reference herein in its entirety.

FIGURE 3 represents a typical button cell of the invention employing an above described catalytic composition. Typical such cell is an air depolarized electrochemical cell (metal-air cell) **39** having an anode **34,** which includes an anode can **40** and electrochemically reactive anode material **42** contained therein. Anode can **40** has a top wall **44,** and circumferential downwardly-depending side wall **46.** Top wall **44** and side wall **46** have, in combination, an inner surface **48** and an outer surface **50.** Side walls **46** terminate in a circumferential can foot **52.** Top wall **44** and side walls **46** generally define a cavity **54** within the anode can, which cavity contains anode material **42.**

Still referring to FIGURE 3, the electrochemical cell has a cathode **56**, which includes a cathode assembly **10** as described above, contained within a cathode can **30.** Cathode assembly **10** thus comprises an electrode. Cathode can **30** has a bottom **58,** and a circumferential upstanding side wall **60.** A plurality of air ports **22** extend through bottom **58** of the cathode can, providing avenues for traverse of oxygen through bottom **58** into cathode **56** adjacent cathode assembly **10.** An air reservoir **68** spaces cathode assembly **10** from bottom **58** and corresponding air ports **22.** Porous diffusion layer **20** is disposed in reservoir **68** between bottom **58** and active carbon matrix **26.**

Anode **34** is electrically insulated from cathode **56** by a seal **74.** Seal **74** includes a circumferential side wall **76** disposed between upstanding side wall **60** of the cathode can and downwardly-depending side wall **46** of the anode can. A seal foot **78** is disposed generally between can foot **52** of the anode can and cathode assembly **10.**

A seal top **80** is positioned at the locus where side wall **76** of seal **74** extends from between side walls **46, 60** adjacent the top of the cell.

An outer surface **82** of cell **39** is thus defined by portions of outer surface **50** of the top of the anode can, an outer surface **72** of side wall **60** of the cathode can, a flat outer surface **64** of the bottom of the cathode can, and top **80** of seal **74.**

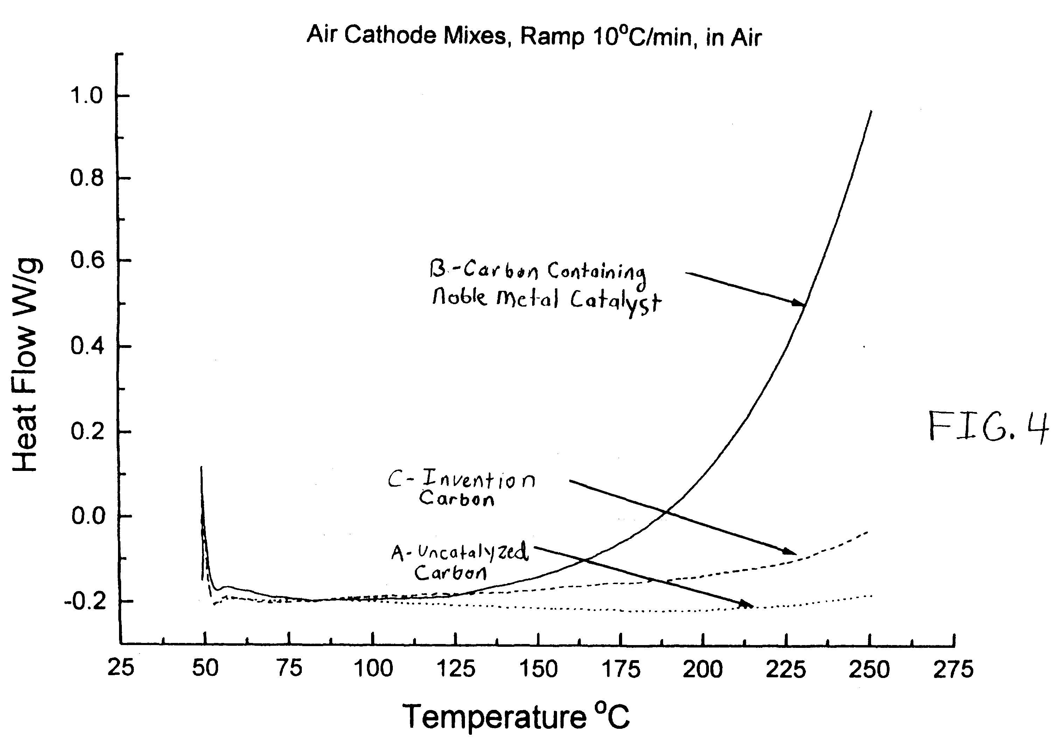

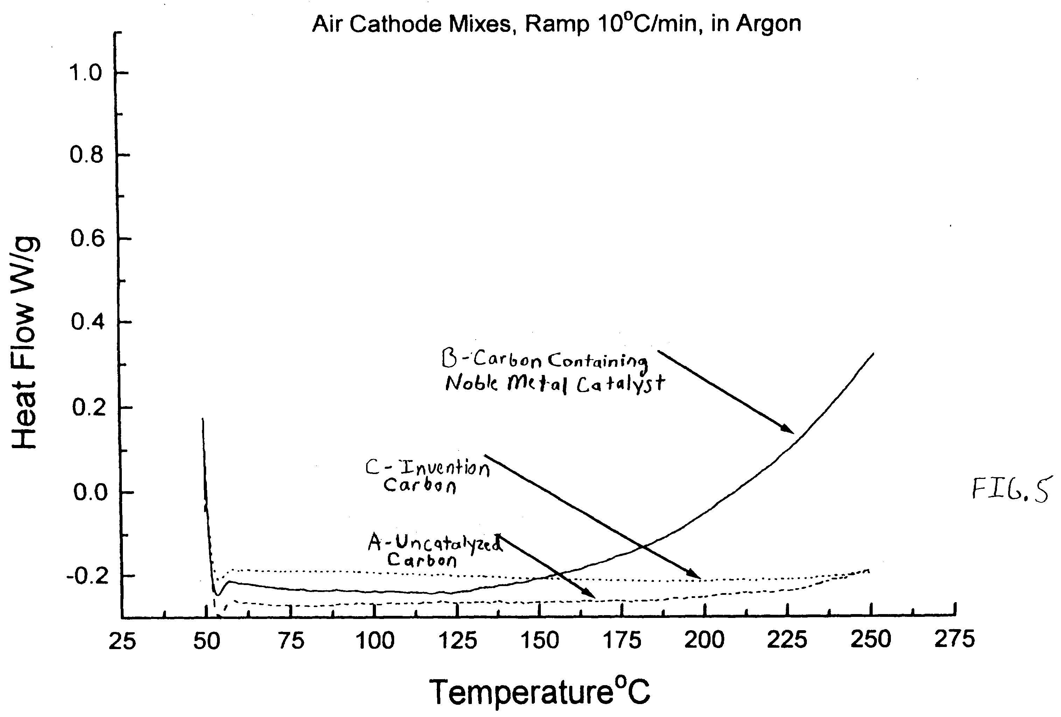

The graphs of FIGURES 4 and 5 illustrate the respective responses of uncatalyzed carbon (carbon A), carbon to which metal catalyst material has been added (carbon B), and carbon made catalytically active without using metal catalyst material (carbon C).

In the air atmosphere of FIGURE 4, the "A" carbon is generally unresponsive to the temperature but doesn't perform well in a cell. The "B" carbon generates significant heat flow starting below 150 degrees C., a sign of significant decomposition, whereby the process of fabricating the air cathode carbon composition is problematic. The "C" carbon is only modestly if at all responsive to the temperature, which indicates that the catalytically active carbon used in the invention is free from rapid oxidation at elevated temperatures of e.g. about 80 degrees C to about 140 degrees C. In other words, the "C" carbon is substantially inert, stable and non-oxidizable at temperatures in the said range, and is thus not prone to ignition or to undergoing exothermic reactions. Thus the catalytically active carbon material used in cells of the invention is beneficial in that cell performance is improved while fabrication difficulties related to catalytically-active carbon are substantially attenuated.

FIGURE 5 illustrates related activity of the "A," "B," and "C" carbons in argon atmosphere. The responses are similar to those in FIGURE 4, and lead to the same conclusions.

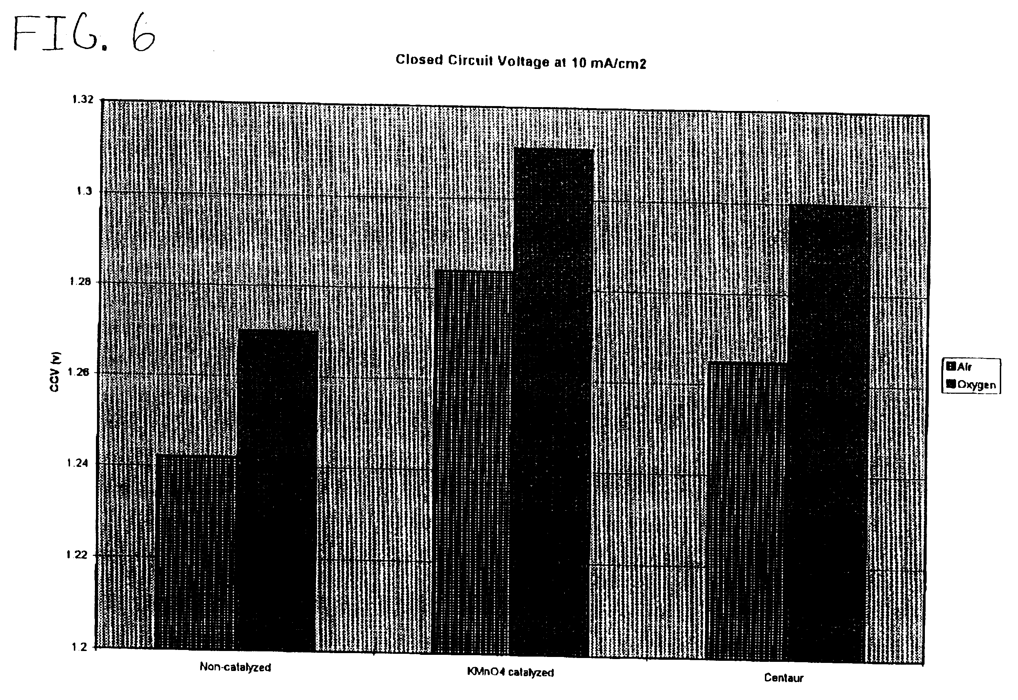

FIG. 6 is a bar chart summarizing the voltage between working electrodes (the cathodes) and zinc metal reference electrodes wherein the working electrodes are made from (i) non-catalyzed carbon, (ii) KMnO₄ catalyzed carbon, and (iii) catalytically active carbon of the invention. The catalytically active carbon of the invention demonstrated a higher voltage than non catalyzed carbon in air and in oxygen. The results included an increased closed circuit voltage of 0.023 volt in air and 0.03 volt in oxygen under a current density of 10mA/cm².

FIGURES 4-6 illustrate that electrodes employing the above described catalytically active carbon advantageously increases the operating voltage of the air cathode while substantially controlling risk of ignition and exothermic reactions during manufacture of the cathode carbon composition.

The invention is not limited in its application to the details of construction or the arrangement of the components set forth in the following description or illustrated in the drawings. The invention is capable of other embodiments or of being practiced or carried out in other and various ways. Also, it is to be understood that the terminology and phraseology employed herein is for purpose of description and illustration and should not be regarded as limiting. Like reference numerals are used to indicate like components.

## Claims

1. An electrode for use in an electrochemical cell, said electrode comprising:
(a) a current collector; and
(b) a catalytically active carbon matrix,
said catalytically active carbon matrix comprising a catalytically active carbon material and a binder, defining a sheet-like structure, said catalytically active carbon material having a peroxide number of about 8 minutes to about 30 minutes, said current collector being embedded in said sheet-like structure of said catalytically active carbon matrix, said catalytically active carbon matrix defining reaction sites for reaction between gaseous and liquid reactants in such electrochemical cell, and being substantially inoxidizable at temperatures of 80 degrees C to about 140 degrees C.

2. An electrode according to claim 1, wherein said catalytically active carbon material is obtainable by:
(a) oxidizing a carbonaceous material at temperatures below 700 degrees C in the presence of an oxidizing moiety and a nitrogen-containing moiety;
(b) thereafter calcining the carbonaceous material in inert atmosphere at a temperature of at least 700 degrees C; and
(c) subsequently implementing activation of the calcined carbonaceous material at a temperature of at least 700 degrees C.

3. An electrode as in claim 2, wherein the activation step includes holding the carbonaceous material at temperature of at least 700 degrees C in the presence of at least one of H₂O, CO₂, and O₂, and thereby activating the carbonaceous material, whereby said catalytically active carbon material is obtained.

4. An electrode as in claim 2 or claim 3, wherein the oxidizing moiety an oxygen-containing carbon oxidant, and/or the nitrogen-containing moiety is selected from the group consisting of ammonia, urea, and melamine, and combinations thereof, and any derivative or combination of derivatives thereof having at least one nitrogen functionality.

5. An air cathode assembly for use in an air depolarized electrochemical cell, said air cathode assembly comprising:
(a) a catalytically active carbon electrode, comprising a cathode current collector having (i) contact sites for cooperation with a cathode terminal, and (ii) a catalytically active carbon matrix, said catalytically active carbon matrix comprising a catalytically active carbon material and a binder, defining a sheet-like structure, said catalytically active carbon material having a peroxide number of about 8 minutes to about 30 minutes, said cathode current collector being embedded in said sheet-like structure of said catalytically active carbon matrix, thereby to form said catalytically active carbon electrode, said catalytically active carbon electrode having a first side and an opposing second side;
(b) a barrier layer disposed on the first side of said catalytically active carbon electrode; and
(c) an air diffusion layer disposed on the second side of said catalytically active carbon electrode.

6. An electrode according to any of claims 1 to 4 or an air cathode assembly according to claim 5, wherein said active carbon material is devoid of effective amounts of noble metal and alkali metal.

7. An electrode according to any of claims 1 to 4 or an air cathode assembly according to claim 5, wherein said catalytically active carbon matrix comprises a manganese moiety.

8. An electrode according to any of claims 1 to 4 or an air cathode assembly according to claim 5, wherein said catalytically active carbon material, prior to being fabricated into said catalytically active carbon matrix has an apparent density of about 0.3 gram per cm³ to about 0.7 gram per cm³.

9. An electrode according to any of claims 1 to 4 or an air cathode assembly according to claim 5, wherein said catalytically active carbon material comprises a product of limited oxidation of a carbonaceous precursor.

10. An electrode according to any of claims 1 to 4 or an air cathode assembly according to claim 5, wherein said catalytically active carbon material has a physical structure selected from the group consisting of granules, pellets, specifically-shaped particles, and powder.

11. An air cathode assembly according to claim 5, wherein said air cathode assembly is obtainable by:
heating a catalytically active carbon composition to a temperature of at least about 80 degrees C to about 140 degrees C, preferably at least about 100 degrees C to about 120 degrees C, and more preferably to a temperature of about 110 degrees C, for at least about 4 hours, for example for at least 8, 12 or 16 hours;
fabricating a mass of the catalytically active carbon composition into a sheet-like structure;
combining the cathode current collector with the carbon composition, thereby to form the electrode, and the first and second sides of the electrode;
mounting the barrier layer on the first side of the electrode; and
mounting the air diffusion layer on the second side of the electrode.

12. An air depolarized electrochemical button cell, comprising:
(a) an anode, including an anode can and an electroactive anode material in said anode can; and
(b) a cathode, including a cathode can and a cathode assembly in said cathode can, said cathode assembly comprising a catalytically active carbon electrode, comprising a cathode current collector having (i) contact sites for cooperation with a cathode terminal, and (ii) a catalytically active carbon matrix, said catalytically active carbon matrix comprising a catalytically active carbon material and a binder, defining a sheet-like structure, said catalytically active carbon material having a peroxide number of about 8 minutes to about 30 minutes, said cathode current collector being embedded in said sheet-like structure of said catalytically active carbon matrix, thereby to form said catalytically active carbon electrode, said catalytically active carbon electrode having a first side and an opposing second side, said cathode assembly further comprising a barrier layer disposed on the first side of said catalytically active carbon electrode, and an air diffusion layer disposed on the second opposing side of said catalytically active carbon electrode.

13. An air depolarized electrochemical button cell according to claim 12, wherein said catalytically active carbon material is devoid of effective amounts of noble metal and alkali metal.

14. An air depolarized electrochemical button cell according to claim 12 or claim 13, wherein said catalytically active carbon matrix comprises a manganese moiety.

15. An air depolarized electrochemical button cell according to claim 12, 13 or 14, wherein said catalytically active carbon material, prior to being fabricated into said catalytically active carbon matrix, has an apparent density of about 0.3 gram per cm³ to about 0.7 gram per cm³.

16. An air depolarized electrochemical button cell according to claim 12, 13, 14 or 15, wherein said catalytically active carbon material comprises a product of limited oxidation of a carbonaceous precursor.

17. An air depolarized electrochemical button cell according to any of claims 12 to 16, wherein said catalytically active carbon material has a physical structure selected from the group consisting of granules, pellets, specifically-shaped particles, and powder.

18. An air depolarized electrochemical button cell according to any of claims 12 to 17, wherein said air cathode assembly is obtainable by:
heating a catalytically active carbon composition to a temperature of at least about 80 degrees C to about 140 degrees C, preferably at least about 100 degrees C to about 120 degrees C, more preferably to a temperature of about 110 degrees C, for at least about 4 hours, for example for at least 8, 12 or 16 hours;
fabricating a mass of the catalytically active carbon composition into a sheet-like structure;
combining the cathode current collector with the carbon composition, thereby to form the electrode, and the first and second sides of the electrode;
mounting the barrier layer on the first side of the electrode; and
mounting the air diffusion layer on the second side of the electrode.

19. A process of making an electrode for use in an electrochemical cell, the process comprising:
(a) heating to a temperature of at least about 80 degrees C to about 140 degrees C, for at least about 4 hours, a carbon composition made by oxidizing a carbonaceous material at temperatures below 700 degrees C in the presence of an oxidizing moiety and a nitrogen-containing moiety, subsequently calcining the carbonaceous material in inert atmosphere at a temperature of at least 700 degrees C, and subsequently implementing activation of the calcined carbonaceous material at a temperature of at least 700 degrees C;
(b) fabricating a mass of the carbon composition into a sheet-like carbon matrix; and
(c) combining a cathode current collector with the carbon composition, thereby to form the electrode.

20. A process according to claim 19, further comprising applying a barrier layer to the electrode on a first side thereof and applying an air diffusion layer to the electrode on an opposing second side.

21. A process according to claim 19 or claim 20, wherein the carbon composition is devoid of effective amounts of noble metal and alkali metal.

22. A process according to any of claims 19 to 21, wherein said catalytically active carbon matrix comprises a manganese moiety.

23. A process according to any of claims 19 to 22, wherein said catalytically active carbon material, prior to being fabricated into said catalytically active carbon matrix, having an apparent density of about 0.3 gram per cm³ to about 0.7 gram per cm³.

24. A process according to any of claims 19 to 23, wherein said catalytically active carbon material has a physical structure selected from the group consisting of granules, pellets, specifically-shaped particles, and powder.

25. A process according to any of claims 20 to 24, wherein the oxidizing moiety comprises an oxygen-containing carbon oxidant, and/or the nitrogen-containing moiety is selected from the group consisting of ammonia, urea, and melamine and combinations thereof, and any derivative or combination of derivatives thereof having at least one nitrogen functionality.

26. A process according to any of claims 20 to 25, wherein the calcined carbonaceous material has a peroxide number of about 8 minutes to about 30 minutes.
